# EUROPEAN PATENT APPLICATION

(11) **EP 3 401 980 A1**
(43) Date of publication of application: **14.11.2018**
(21) Application number: 17169905.1
(22) Date of filing: 08.05.2017
(51) Int. Cl.: H01M 2/34, H02J 7/34, H01M 10/052, H01M 10/46, H01M 10/48

(54) **BATTERY MODULE WITH REDUCED SHORT CIRCUIT CURRENT**

(71) Applicant: Lithium Energy and Power GmbH & Co. KG, 70469 Stuttgart (DE)
(72) Inventor: Deromelaere, Gaetan, Lithium Energy And Power Corpo, 601 8520 (JP); Wille, Christopher, 70563 Stuttgart (DE); Klinsmann, Markus, 70195 Stuttgart (DE)
(74) Representative: Bee, Joachim

(57) **Abstract**

The Invention concerns a battery module (1), comprising a battery cell (2) having a positive battery terminal (3) and a negative battery terminal (4), a energy storage device (5) having a positive terminal (6) and a negative terminal (7), wherein the positive terminal (6) of the energy storage device (5) is coupled to the negative battery terminal (4) via a first electrical path (9) and the negative terminal of the energy storage device (5) is coupled to the positive battery terminal (3) via a second electrical path (10), wherein the first electrical path (9) and/or the second electrical path (10) comprises a switching unit (8) that is arranged to switch an electrical connection between the energy storage device (5) and the battery cell (2), wherein the switching unit (8) is arranged to establish the electrical connection between the energy storage device (5) and the battery cell (2) when a damage of the battery cell (2) occurs.

## Description

### Prior Art

The present invention concerns a battery module. At the present, lithium ion batteries typically comprise multiple battery modules. Lithium ion batteries are energy sources having a high specific energy density. These batteries are predominantly used in consumer electronics. However, improvements in safety are required for full acceptance of lithium ion batteries in transportation applications, such as electric vehicles. The presence of a volatile, combustible electrolyte and an oxidizing agent, the lithium oxide cathodes, makes the battery cells of a lithium ion battery susceptible to fires and explosions. Internal shorts or mechanical damage can trigger a thermal runaway of the battery cells and, when left unchecked, can lead to combustion of battery materials.

When a lithium ion battery cell exceeds a critical temperature, e.g. due to joule heating at an internal shortage or penetration location, exothermic chemical reactions are initiated between the electrodes and the electrolyte. This leads to a rise of the lithium ion battery cells internal pressure and temperature. The increased temperature accelerates the chemical reactions, producing even more heat. Further, the gap to the onset temperature of thermal runaway in lithium ion batteries decreases with increasing temperature. Further, the onset temperature of thermal runaway in lithium ion batteries decreases with increasing state of charge, making lithium ion cells even more susceptible to explosive failure at high states of charge.

A possible measure to prevent a thermal runaway of battery cells is the so-called fast discharge device, which externally shortens the battery cells. This way, a current flowing around an area of damage in a battery cell is reduced due to an alternative external low resistive current path.

In view of the above, US2014/0049103A1 discloses a method for transferring batteries to a discharged state and DE102011115550A1 discloses a Lithium-Ion-Battery comprising a protection against overcurrent.

### Disclosure of the Invention

A battery module according to the invention comprises a battery cell having a positive battery terminal and a negative battery terminal, an energy storage device having a positive terminal and a negative terminal, wherein the positive terminal of the energy storage device is coupled to the negative battery terminal via a first electrical path and the negative terminal of the energy storage device is coupled to the positive battery terminal via a second electrical path, wherein the first electrical path and/or the second electrical path comprises a switching unit that is arranged to switch an electrical connection between the energy storage device and the battery cell, wherein the switching unit is arranged to establish the electrical connection between the energy storage device and the battery cell when a damage of the battery cell occurs.

The damage of the battery cell is in particular a damage, which causes an unwanted contact between an anode and a cathode of the battery cell. In particular, the damage can be detected by monitoring a battery cell voltage of the battery cell, a battery cell current of the battery cell and/or a temperature of the battery cell. According to the invention, an electrically conductive connection exists between the positive terminal of the energy storage device and the negative battery terminal, and an electrically conductive connection exists between the negative terminal of the energy storage device and the positive battery terminal when a presence of a damage of the battery cell has been determined. In case that no damage of the battery cell has been determined, the positive terminal of the energy storage device is disconnected from the negative battery terminal, and/or the negative terminal of the energy storage device is disconnected from the positive battery terminal.

The switching unit is arranged to switch the electrical connection between the energy storage device and the battery cell. This means that the first electrical path and/or the second electrical path can be either switched to a first status or to a second status, wherein the electrical path is conductive in the first status and the electrical path is not conductive the second status.

In a battery module according to the present invention battery safety is increased, as a current flowing in a mechanically damaged area, also referred to as damage area, of the battery cell is reduced. For example, a short circuit current is reduced during a nail penetration test of the battery module or the battery cell. In this example, the damage area of the battery cell is the penetration area, in which the battery cell is penetrated by a nail. Thus, it is avoided that the battery cell, and therefore the battery module, is locally heating up to a degree that would cause a thermal runaway.

According to the invention, a current is reduced in the damage area of a battery module by providing a current in opposite direction by the energy storage device. The current provided by the energy storage device is running in a direction in the damaged area of the battery cell, which is opposite to a direction of the current that is provided by the battery cell itself. As a consequence, an overall current flowing in the damaged area is reduced, resulting in less Joule heating and a lower temperature rise as well as a better safety behavior of the battery cell.

The dependent claims disclose advantageous modifications of the invention.

According to an aspect of the invention, the discharge resistor is aligned in the first electrical path and/or the second electrical path. This allows a discharge of the battery cell, bringing the battery cell to a safe state. A portion of the current provided by the battery cell is running via the discharge resistor and is therefore not running through the damaged area of the battery cell. Therefore, only a smaller current is to be provided by the energy storage device to compensate the current provided by the battery cell inside the damage are of the nail penetration. A capacity of the energy storage device is preferably chosen in a dimension that allows the energy storage device to provide a current during the entire time from occurring of the damage, until the battery cell has reached a safe state.

According to an aspect of the invention, the energy storage device comprises a capacitor and/or a further battery cell. Using a capacitor, a high current can be provided in short time, which is advantageous to compensate a high current in the damage area within the first moments after the damage occurred. Using a further battery cell in the energy storage device allows ensuring availability of a compensating current over a long time range. Consequently, it can be ensured that the battery cell can be kept in a safe status over a long time interval.

According to an aspect of the invention, the battery module further comprises a charging unit, which is configured to charge and/or discharge the energy storage device. This allows that the energy storage device is discharged and the entire battery module can be brought into a safe state, which is advantageous in various situations, for example when the battery module is to be dismounted or disassembled. If the charging unit is configured to charge the energy storage device, a low-maintenance battery module is provided, as no additional external charging device needs to be provided.

According to an aspect of the invention, the battery module further comprises a control circuit, wherein the control circuit is configured to determine a short circuit current that is running through the battery cell in case of a damage of the battery cell, and is further configured to control a current in the first electrical path and/or the second electrical path based on the determined short circuit current. A current in the first electrical path and in the second electrical path is controlled by the control circuit, wherein the current is in particular controlled by using a variable resistor. The variable resistor is preferably located in the first or the second electrical path. In particular, the variable resistor is comprised by the switching unit. In an example, the variable resistor is a transistor, which is also aligned to establish the electrical connection between the energy storage device and the battery cell. The short circuit current is a current, which occurs in the damage area of the battery cell. Without any compensation, the short circuit current, which occurs in case of a damage of the battery cell, is variable and is in particular dependent on a state of charge of the battery cell and on a temperature of the battery cell. To achieve a low short circuit current and to achieve a low increase of temperature of the battery cell it is therefore advantageous to monitor the short circuit current. It is not mandatory to measure the short circuit current directly. The short circuit current can be determined based on other battery parameters of the battery cell. For example, the short circuit current can be estimated based on a temperature increase or voltage drop of the battery cell. This estimation can be performed under consideration of a state of charge of the battery cell, a present output voltage of the battery cell and/or a present output current of the battery cell.

According to an aspect of the invention, the switching unit comprises a transistor that is configured to establish the electrical connection between the energy storage device and the battery cell. By means of the transistor it is possible to adjust a current that is provided by the energy storage device. This allows that the current that is provided by the energy storage device can be kept constant or can be configured to a certain predetermined value.

According to an aspect of the invention, the switching circuit comprises an antifuse. In particular, the antifuse is configured to establish the electrical connection between the energy storage device and the battery cell. An antifuse is a fuse, which closes a contact when activated, which is contrary to a regular fuse, which is opening a contact when activated. In particular, the battery module further comprises an activation circuit for detecting damage of the battery cell and to activate the antifuse in case a damage of the battery cell has been detected. In particular, the activation circuit is comprised by a battery control unit.

According to an aspect of the invention, the battery cell is a lithium-ion cell. Lithium ion cells are typically having a high specific energy density. It is advantageous to avoid a thermal runaway in such a battery, as a thermal runaway can lead to high damage due to the high specific energy density.

A battery comprising a battery module according to any of the preceding claims is advantageous. Such a battery shows all advantages of the battery module according to the present invention. It is further advantageous, if multiple battery modules according to the present invention are connected in series or in parallel within the battery. Such a battery is providing a high level of safety.

### Description of the figures

In the following, embodiments of the invention are described in detail with reference to the figures. In the figures:
- Figure 1: shows a schematic representation of a battery module according to a first embodiment of the invention,
- Figure 2: shows a schematic representation of a battery module according to a second embodiment of the invention,
- Figure 3: shows an equivalent circuit diagram of a battery module according to the invention in case of a damage of the battery cell, and
- Figure 4: shows a schematic representation of a battery according to an embodiment of the invention.

### Preferred embodiments of the invention

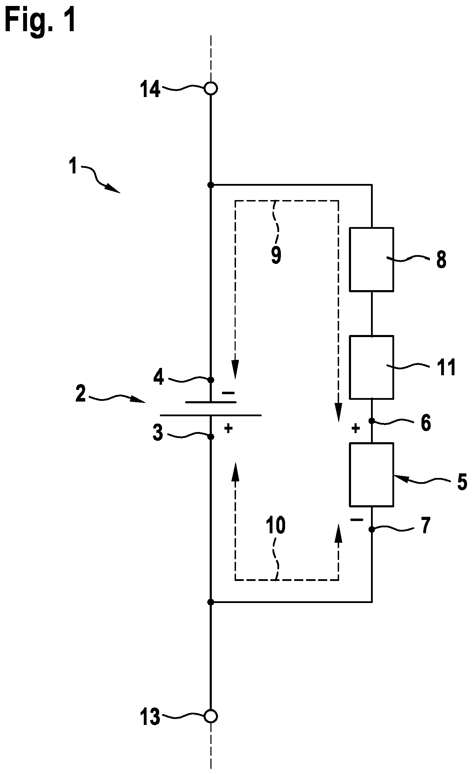

Figure 1 shows a schematic representation of a battery module 1 according to a first embodiment of the invention.

The battery module 1 comprises a battery cell 2 having a positive battery terminal 3 and a negative battery terminal 4. The positive battery terminal 3 is a positive pole of the battery cell 2. The negative battery terminal 3 is a negative pole of the battery cell 2. A battery cell voltage, which is provided by the battery cell 2, is available between the positive battery terminal 3 and the negative battery terminal 4. The battery cell 2 is a lithium ion cell.

The negative battery terminal 4 is connected to a first terminal 14 of the battery module 1. The positive battery terminal 3 is connected to a second terminal 13 of the battery module 1. A voltage is provided from the battery module via the first terminal 13 and the second terminal 13.

The battery module 1 further comprises an energy storage device 5 having a positive terminal 6 and a negative terminal 7. In this first embodiment of the invention, the energy storage device 5 is a capacitor. In alternative embodiments the energy storage device 5 is a further battery cell. The further battery cell is having a lower capacity than the battery cell 2. In further alternative embodiments the further battery cell is having the same or a higher capacity than the battery cell 2 or the energy storage device comprises a capacitor and the further battery cell, wherein the capacitor and the further battery cell are connected in parallel.

The positive terminal 6 of the energy storage device 5 is coupled to the negative battery terminal 4 of the battery cell 2 via a first electrical path 9. The negative terminal 7 of the energy storage device 5 is coupled to the positive battery terminal 3 of the battery cell 2 via a second electrical path 10.

The first electrical path 9 comprises a switching unit 8 and a discharge resistor 11. It is noted that the switching unit 8 and the discharge resistor are combined into a single element in alternative embodiments of the invention. The first electrical path 9 starts with the positive terminal 6 of the energy storage device 5 and ends with the negative battery terminal 4 of the battery cell 2. A first terminal of the discharge resistor 11 is connected to the positive terminal 6 of the energy storage device 5. A second terminal of the discharge resistor 11 is connected to a first terminal of the switching unit 8. A second terminal of the switching unit 8 is connected to the negative battery terminal 4 of the battery cell 2. Thus, the discharge resistor 11, the switching unit 8 and the energy storage device 5 are connected in series.

The second electrical path 10 is an electrically conductive connection between the negative terminal 7 of the energy storage device 5 and the positive battery terminal 3 of the battery cell 2. There are no electronic components aligned in the second electrical path 10.

The switching unit 8 is arranged to switch the electrical connection between the energy storage device 5 and the battery cell 2. In this first embodiment the electrical connection is switched in the first electrical path 9. The switching unit 8 is an antifuse. A contact in the antifuse is closed, once damage in the battery cell 2 occurs. The damage of the battery cell 2 is detected by monitoring the battery cell 2, e.g. by monitoring a battery cell voltage of the battery cell 2, a battery cell current of the battery cell 2 and/or a temperature of the battery cell 2. This monitoring is performed by a battery control unit or an activation circuit unit that is adjusted to detect a damage of the battery cell 2. The battery control unit or the activation circuit is sending a signal to the antifuse in case of a damage of the battery cell 2 to trigger the antifuse. In case the antifuse is triggered, this means that the switching unit 8 is closing a contact. The switching unit 8 is capable to establish the electrical connection between the energy storage device 5 and the battery cell 2 in the first electrical path 9. In case the battery cell 2 is not damaged, a contact in the antifuse is open. No electrically conductive connection is provided between the energy storage device 5 and the battery cell 2 via the first electrical path 9. In case the battery cell 2 is damaged, the contact in the antifuse is closed. An electrically conductive connection is provided between the energy storage device 5 and the battery cell 2 via the first electrical path 9.

In this first embodiment of the invention, a discharge process of the battery cell 2 via a fast discharge device is caused by a closing of the contact of the antifuse in the switching unit 8. The fast discharge device is composed of the switching unit 8 and the discharge resistor 11. Depending on the design of the energy storage device 5, further components might be necessary for the fast discharge device. For example, a diode, which is connected in parallel to the energy storage device 5, might be provided to allow a current to pass the capacitor of the energy storage device 5.

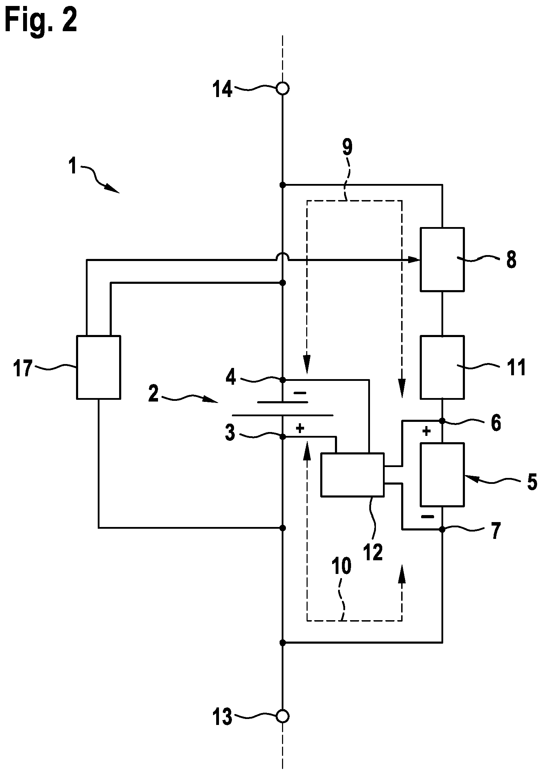

Figure 2 shows a schematic representation of a battery module according to a second embodiment of the invention. The second embodiment is substantially identical to the first embodiment of the invention. Though, the battery module 1 additionally comprises a charging unit 12 and a control circuit 13. The charging unit 12 and the control circuit 13 are optional components.

In place of the antifuse, the switching unit 8 comprises a transistor in this second embodiment of the invention. The transistor is aligned and configured to establish the electrical connection between the energy storage device 5 and the battery cell 2 in the first electrical path 9. For controlling the transistor, the battery module 1 comprises a sensor circuit. The sensor circuit is arranged to measure parameters of the battery cell 2. For example, the sensor circuit is arranged to measure a battery cell voltage or a battery cell current of the battery cell 2. Based on the measured values, the transistor is switched to a conducting state to establish the electrical connection between the energy storage device 5 and the battery cell 2 via the first electrical path 9, or the transistor is switched to a nonconducting state to disable the electrical connection between the energy storage device 5 and the battery cell 2. In alternative embodiments, similar to the first embodiment of the invention, the transistor is switched based on the battery cell temperature.

The sensor circuit can be an independent circuit. However, in this second embodiment of the invention, the sensor circuit is integrated in the control circuit 13.

The control circuit 13 is configured to determine a short circuit current that is running in a damage area 23 through the battery cell 2 in case of a damage of the battery cell 2. The control circuit 13 is further configured to control a current in the first electrical path 9 and/or in the second electrical path 10. The control circuit 13 is connected to the positive battery terminal 3 and to the negative battery terminal 4. As described above, the control circuit 13 comprises the sensor circuit. The control circuit 13 uses the sensor circuit to measure the battery cell voltage, which is measured between the positive battery terminal 3 and the negative battery terminal 4. Based on the battery cell voltage of the battery cell 2 a state of charge of the battery cell 2 is determined. For example, a sudden decrease in the battery cell voltage is indicating a damage of the battery cell 2. In case a damage of the battery cell 2 is determined, the transistor is switched to a closed state to establish the electrical connection between the energy storage device 5 and the battery cell 2. At the same time, the transistor is used as a variable resistor. By controlling a resistance value of the transistor, the control circuit 13 is able to control a current the first electrical path 9.

The control circuit 13 determines the short circuit current based on an actual state of charge of the battery cell 2 and on a degree of decrease of the battery cell voltage. The short circuit current is a current between an anode of the battery cell 2 and a cathode of the battery cell 2. To determine the short circuit current, the control circuit 13 is either referring to tables or is calculating the short circuit current based on a model of the battery cell 2. Thus, the short circuit current is not directly measured but is estimated by the control circuit 13 by using available parameters of the battery cell 2. The control circuit 13 then sets a resistance value of the transistor to provide a current that is capable to compensate the estimated short circuit current. The control circuit 13 adjusts the resistance value of the transistor to minimize the short circuit current. In alternative embodiments, the short circuit current is calculated based on a change of the battery cell temperature.

In this second embodiment of the invention, the battery module 1 comprises the charging unit 12. The charging unit 12 is configured to charge and to discharge the energy storage device 5. A charging of the energy storage device 5 is automatically initiated, if a voltage, which is supplied by the energy storage device 5, drops below a predetermined threshold value. A discharging of the energy storage device 5 can be initiated via a user command that is provided to the charging unit 12. The charging unit 12 is connected to the positive terminal 6 of the energy storage device 5 and to the negative terminal 7 of the energy storage device 5. For charging, a charge current is supplied from the charging unit 12 to the energy storage device 5 via this connection. The charging unit 12 is further connected to the positive battery terminal 3 and to the negative battery terminal 4 of the battery cell 2. The charging unit 12 is supplied via this connection to the battery cell 2.

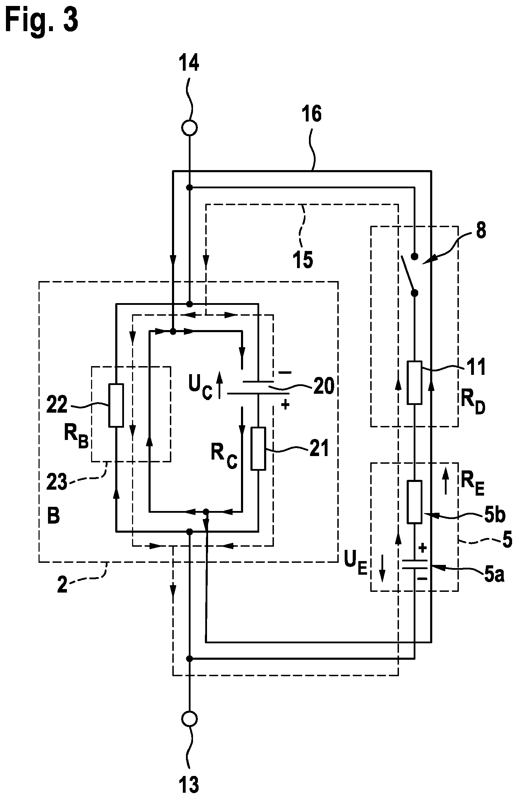

Figure 3 shows an equivalent circuit diagram of a battery module 1 according to the invention in case of a damage of the battery cell 2. The equivalent circuit diagram applies to the first and the second embodiment of the invention.

A current path of a current, which is provided from the battery cell 2, is indicated with a continuous line 16. A current path of a current, which is provided from the energy storage device 5, is indicated with a dashed line 15. A flow direction of the current is indicated by arrows on the continuous line 16 and the dashed line 15.

The switching unit 8 is represented by a switch. The switch is closed. Thus, the electrical connection between the energy storage device 5 and the battery cell 2 is established. The energy storage device 5 is represented by a serial connection of a capacitor 5a and a first resistor 5b in the equivalent circuit diagram. The battery cell 2 comprises a current supply 20, an internal resistor 21 and a damage resistor 22. The internal resistor 21 represents an internal resistance of the undamaged battery cell 2. The damage resistor 22 represents a path between an anode and a cathode of the battery cell that is caused by the damage of the battery cell 2. The short circuit current is a current that is running through the damage resistor 22. The current supply 20 is connected in series with the internal resistor 21. The damage resistor 22 is connected in parallel to the current supply 20 and the internal resistor 21. The ends of this parallel circuit are forming the positive battery terminal 3 and negative battery terminal 4. The damage area 23 is an area of the battery cell 2, in which the battery cell 2 has been damaged, e.g. by penetration of the battery cell 2 by an object. The damage resistor 22 is therefore aligned in the damage area 23.

In case of a mechanical damage of the battery cell 2, for example caused by penetration of the battery cell by a nail, a separator between an anode and a cathode of the battery cell 2 is destroyed. This leads to the consequence that a current between the anode and the cathode is caused in the damaged area of the separator. This current is referred to as the short circuit current. The short circuit current is limited by a certain resistance, which is inherent to the damage. This resistance is represented by the damage resistor 22.

Following current path that is indicated by the continuous line 16, it can be seen that a current, which is provided from the current supply 20 of the battery cell 2, is running through the internal resistor 21 and the damage resistor 22. A direction of the current is directed from a positive terminal of the current supply 20 to a negative terminal of the current supply 20. As a consequence, a current, which is provided by the battery cell 2 is running through the damage area 23 and the damage resistor 22 in a first direction, which is from the bottom to the top in figure 3. A portion of the current that is provided by the current supply 20 is running through the first electrical path 9 and the second electrical path 10, as the switching unit 8 enables the electrical connection between the energy storage device 5 and the battery cell 2, and therefore closes an electric circuit over the electrical paths 9, 10. Also along the first and the second electrical path, the direction of the current 9, 10 is directed from the positive terminal of the current supply 20 to the negative terminal of the current supply 20.

Simultaneously, a current is provided by the energy storage device 5. Along the first and the second electric path 9, 10, this current is directed in the same direction as the current, which is provided by the battery cell 2. Inside the battery cell 2, the current that is provided by the energy storage device 5 is running through the damage area 23 and the damage resistor 22 in a second direction, which is from the top to the bottom in figure 3 and is opposite to the first direction. Due to the opposite directions of the currents, a current in the damage resistor 22 is a difference between these currents. In other words: the currents are compensating each other. The currents are fully compensating each other in case the absolute values of these currents are identical.

Figure 4 shows a schematic representation of a battery according to an embodiment of the invention. Multiple battery modules 2, 2' as described above are serially connected, wherein the first terminal 14 of a first battery module 2 is connected to the second terminal 13' of a second battery module 2.

In the following, a summary of some important aspects of the invention is provided.

If the battery cell 2 is penetrated by an object without connection to an external device, such as, for example, a fast discharge device, it discharges over the local shorts created in the mechanically damaged area around the object. This is indicated by the current flow in the damage area 23 in figure 3. This can lead to a hazardous event.

If a fast discharge device is attached to the battery cell 2, a part of the current that is provided by the electrochemical battery cell 2, runs through the fast discharge device. Such a fast discharge device is provided by the discharge resistor 11 and the switching unit 8. This reduces the current in the damage area 23, bringing the battery cell 2 into a safer state, where the hazardous event is less probable. The fast discharge device can be an antifuse or any other kind of switch like a MOSFET.

If another current source is inserted with appropriate polarity into an external string of the fast discharge device, as given with the energy storage device 5, the current provided by this source runs the opposite direction through the damage area of the damaged cell. As a current source for the energy storage device 5, for example, a further electrochemical cell or a capacitor can be chosen.

The energy storage device 5 can be dimensioned (capacity, internal resistance, etc.) such that (at least) a (peak) current running through the damage area 23 is fully compensated. The peak is only lasting for less than one second and the current at the damage area can be quite low. For example, the current at the damage area can be between 1 to 10 Amperes per penetrated layer of the battery cell 2. Thus, a dimension of the energy storage device 5 can be small.

It is assumed that the energy storage device 5 is a capacitor 5a, which is providing a capacitor voltage U_{E} and is having an inner resistance R_{E}. The capacitor 5a of the energy storage device 5 is connected via the fast discharge device to the battery cell 2. The battery cell 2 is having an open-circuit-voltage U_{C} and an inner resistance Rc. The fast discharge device comprises the discharge resistor 11 having a resistance value R_{D}. For this scenario, which is also depicted in figure 3, the capacitor voltage U_{E} can be calculated for a desired resulting current I_{B} of 0 Ampere for the damage area 23. The capacitor voltage U_{E} can be calculated using the formula U_{E} = U_{C} x (R_{E} + R_{D}) / R_{C}. This relation is derived from the equivalent circuit diagram in figure 3. In order to compensate the current also at later stages of the discharge of the battery cell 2, the energy storage device 5 needs more detailed dimensioning, possibly realized through simulation studies.

Since the energy storage device 5 is connected to a fast discharge current path, it is only discharged when a fast discharge is activated. The charging of the energy storage device 5 can be done using the available energy of the battery cell 2 by adding one or two switches between the energy storage device 5 and the battery cell 2, forming the charging unit. These switches can also be used to discharge the energy storage device 5 if needed and thereafter recharge the energy storage device 5 to fulfill its safety function.

The effect described is also present in a serial connection of battery cells 2 that is discharged by one single fast discharge device. The main difference of this approach is to specifically dimension the energy storage device 5, such that the current in the damage area 23 is decreased most efficiently. The principle can therefore also be applied to a number of battery cells 2 in a serial connection. In this case, the energy storage device 5 just needs to be dimensioned appropriately.

## Claims

1. A battery module (1), comprising:
- a battery cell (2) having a positive battery terminal (3) and a negative battery terminal (4),
- an energy storage device (5) having a positive terminal (6) and a negative terminal (7),
- wherein the positive terminal (6) of the energy storage device (5) is coupled to the negative battery terminal (4) via a first electrical path (9) and the negative terminal of the energy storage device (5) is coupled to the positive battery terminal (3) via a second electrical path (10),
- wherein the first electrical path (9) and/or the second electrical path (10) comprises a switching unit (8) that is arranged to switch an electrical connection between the energy storage device (5) and the battery cell (2),
- wherein the switching unit (8) is arranged to establish the electrical connection between the energy storage device (5) and the battery cell (2) when a damage of the battery cell (2) occurs.

2. The battery module (1) according to claim 1, **characterized in that** a discharge resistor (11) is aligned in the first electrical path (9) and/or the second electrical path (10).

3. The battery module (1) according to any of the preceding claims, **characterized in that** the energy storage device (5) comprises a capacitor and/or a further battery cell.

4. The battery module (1) according to any of the preceding claims, **characterized in that** the battery module (1) further comprises a charging unit (12), which is configured to charge and/or discharge the energy storage device (5).

5. The battery module (1) according to claim 4, **characterized in that** the charging unit (12) is coupled to the battery cell (2) for supplying the charging unit (12).

6. The battery module (1) according to any of the preceding claims, **characterized in that** the battery module (1) further comprises a control circuit (13), wherein the control circuit (13) is configured to determine a short circuit current that is running through the battery cell (2) in case of a damage of the battery cell (2), and is further configured to control a current in the first electrical path (9) and/or the second electrical path (10) based on the determined short circuit current.

7. The battery module (1) according to any of the preceding claims, **characterized in that** the switching unit (8) comprises a transistor that is configured to establish the electrical connection between the energy storage device (5) and the battery cell (2).

8. The battery module (1) according to any of the preceding claims, **characterized in that** the switching circuit (8) comprises an antifuse.

9. The battery module (1) according to any of the preceding claims, **characterized in that** the battery cell (2) is a lithium-ion cell.

10. A Battery, comprising a battery module (2) according to any of the preceding claims.
